# EUROPEAN PATENT APPLICATION

(11) **EP 2 139 181 A1**
(43) Date of publication of application: **30.12.2009**
(21) Application number: 08757759.9
(22) Date of filing: 18.06.2008
(51) Int. Cl.: H04L 12/58

(54) **A METHOD AND SYSTEM FOR CATEGORIZING CONTENT**

(30) Priority: 04.07.2007 CN 200710122976
(71) Applicant: Huawei Technologies Co., Ltd., Longgang District, Shenzhen Guangdong 518129 (CN)
(72) Inventor: WANG, Ping, Shenzhen Guangdong 518129 (CN); ZUIDWEG, Johan, Shenzhen Guangdong 518129 (CN); PENG, Jin, Shenzhen Guangdong 518129 (CN); GU, Chong, Shenzhen Guangdong 518129 (CN)
(74) Representative: Pfenning, Meinig & Partner GbR
(86) International application number: PCT/CN2008/071350
(87) International publication number: WO 2009/006813

(57) **Abstract**

The present invention discloses a method and system for categorizing contents and relates to network and communication technologies. The content categorizing method includes: categorizing a content for which a category is requested and determining the content category; generating a digital signature according to the content and the content category; and returning the content category and the digital signature. The content screening method includes: receiving a pre-categorized content that carries a content, a content category and a digital signature; performing trust verification on the pre-categorized content according to the digital signature and when the trust verification is successful, screening the content according to the content category carried in the pre-categorized content. The present invention also discloses a content categorizing apparatus, a content screening apparatus, and a system for implementing a trust model. With the present invention, when a pre-categorized content is consumed, the correct mapping between the content and content category carried in the pre-categorized content is verified and the identity of the content categorizer is authenticated to guarantee the legal source of data.

## Description

### Field of the Invention

The present invention relates to network and communication technologies, and in particular, to a method and system for categorizing contents.

### Background of the Invention

With the rapid development of network and information technologies, a user may be exposed to unhealthy contents and the contents that threaten the client. It is therefore more and more important to screen communication contents. Traditional screening technologies include list based screening, keyword based screening, template based screening, and categorization based screening. The Categorization Based Content Screening (CBSC) is a hot topic of research for its flexibility and wide adaptability.

The current CBSC framework includes two parts in terms of structure: Screening Component (SC) and Categorization Component (CC). The CC provides a CBCS-1 interface. When the CBCS is called, a screening requestor sends contents to the SC via a PEM-1 interface; the SC screens the contents and returns the result to the requestor via the PEM-1 interface; and the requestor sends the accepted contents or a reject message to the user according to the returned result. In the CBCS proxy mode, the SC screens contents for interactions between a target resource requestor and the target resource via a proxy interface and an interface to other resources and thus decides whether to deliver the contents.

A Content Provider (CP) provides contents for end users. To ensure that the contents provided can be quickly screened in the SC, the CP may act as a categorization requestor to obtain content category information from the CC via the CBCS-1 interface in advance without real-time requirements. The CP attaches the category information to the contents in the form of metadata, watermark, or any other form to create pre-categorized contents (including categorized contents of the content category but not limited to the content category and the attachment and association form of the contents) for end users to download.

When implementing the present invention, however, the inventor finds that traditional content screening technologies are unable to verify the correct mapping between contents and content categories in pre-categorized contents in a process of consuming the pre-categorized contents. For example, a CP obtains category CA by using content A but may use content category CB of content A + content B when generating a pre-categorized content; later, when the pre-categorized content is consumed (for example, for screening), the CP can alter the category information of the content. As a result, the mapping between the content category and the content cannot be effectively assured and the categorization of contents is therefore meaningless.

### Summary of the Invention

To verify the correct mapping between contents and content categories in pre-categorized contents when the pre-categorized contents are consumed, embodiments of the invention provide a method and system for categorizing contents.

A content categorization method includes: categorizing a content for which a category is requested and determining the content category; generating a digital signature according to the content and the content category, where the digital signature is for trust verification before content screening; and returning the content category and the digital signature.

A content screening method includes: receiving a pre-categorized content that carries a content, a content category and a digital signature; and performing trust verification on the pre-categorized content according to the digital signature and when the trust verification is successful, screening the content according to the content category carried in the pre-categorized content.

A content categorization apparatus includes:

a content categorizing module, adapted to categorize a content for which a category is requested and determine the content category;

a digital signature module, adapted to generate a digital signature according to the content and the content category determined by the content categorizing module, where the digital signature is for trust verification before content screening; and

a returning module, adapted to return the content category determined by the content categorizing module and the digital signature generated by the digital signature module.

A content screening apparatus includes:

a receiving module, adapted to receive a pre-categorized content that carries a content, a content category and a digital signature;

a trust verifying module, adapted to perform trust verification on the pre-categorized content according to the digital signature carried in the pre-categorized content received by the receiving module and when the trust verification on the pre-categorized content is successful, send a first trigger signal; and

a content screening module, adapted to receive the first trigger signal sent by the trust verifying module and perform content screening according to the content category carried in the pre-categorized content received by the receiving module.

A system for implementing a trust model includes a content categorizing apparatus, a content categorization requesting apparatus and a content screening apparatus, where:

the content categorizing apparatus is adapted to categorize a content for which the content categorization requesting apparatus requests a content category and determine the content category; generate a digital signature according to the content and the content category; and return the content category and the digital signature to the content categorization requesting apparatus;

the content categorization requesting apparatus is adapted to request a category from the content categorizing apparatus, receive the content category and the digital signature returned by the content categorizing apparatus, and generate and send a pre-categorized content that carries the content, the content category and the digital signature; and

the content screening apparatus is adapted to receive the pre-categorized content that carries the content, the content category and the digital signature, perform trust verification on the pre-categorized content according to the digital signature and when the trust verification is successful, screen the content according to the content category carried in the pre-categorized content.

A computer readable storage medium stores a computer program that enables one or more processors to execute the following steps:

categorizing a content for which a category is requested and determining the content category;

generating a digital signature according to the content and the content category, where the digital signature is for trust verification before content screening; and

returning the content category and the digital signature.

A computer readable storage medium stores a computer program that enables one or more processors to execute the following steps:

receiving a pre-categorized content that carries a content, a content category and a digital signature; and

screening the content according to the content category carried in the pre-categorized content when trust verification on the pre-categorized content according to the digital signature is successful.

In the embodiments of the invention, after categorizing the content for which a content categorization requester requests a category and determining the content category, the content categorizer generates a digital signature according to the content and the content category and returns the content category and the digital signature. Later when the content screening is performed, the content screener verifies whether the pre-categorized content is trustable according to the digital signature carried in the received pre-categorized content and when the verification is successful, the content screener screens the content according to the content category carried in the pre-categorized content. Because of the digital signature generation process and the digital signature verification process, when a pre-categorized content is consumed, the correct mapping between the content and the content category carried in the pre-categorized content is verified and the identity of the content categorizer is authenticated to guarantee the legal source of data.

### Brief Description of the Drawings

FIG. 1 is a flowchart of a content categorizing method provided in an embodiment of the invention;

FIG. 2 shows a structure of a content categorizing apparatus provided in an embodiment of the invention;

FIG. 3 shows a detailed structure of a content categorizing apparatus provided in an embodiment of the invention;

FIG. 4 is a flowchart of a content screening method provided in an embodiment of the invention;

FIG. 5 shows a structure of a content screening apparatus in an embodiment of the invention;

FIG. 6 shows a system for implementing a trust model in an embodiment of the invention;

FIG. 7 is a flowchart for implementing a trust model in an embodiment of the invention;

FIG. 8 is a flowchart for generating a pre-categorized content in a first embodiment of the invention;

FIG. 9 is a flowchart for generating a digital signature in an embodiment of the invention;

FIG. 10 is a flowchart for screening a pre-categorized content in the first embodiment of the invention;

FIG. 11 is a flowchart for verifying a digital signature in an embodiment of the invention;

FIG. 12 is a flowchart for generating a pre-categorized content in a second embodiment of the invention; and

FIG. 13 is a flowchart for screening a pre-categorized content in the second embodiment of the invention.

### Detailed Description of the Invention

The embodiments of the invention are intended to verify the correct mapping between contents and content categories in pre-categorized contents in the consumption of pre-categorized contents.

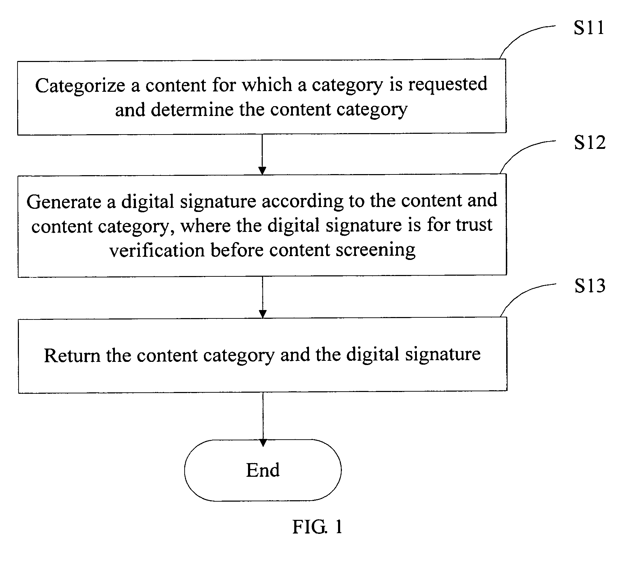

One embodiment of the invention provides a content categorization method. As shown in FIG. 1, the method includes the following steps:

S11. A content categorizer categorizes a content for which a content categorization requesting apparatus requests a category, and determines the content category.

S12. The content categorizer generates a digital signature according to the content and the content category, where the digital signature is for trust verification before content screening.

In this step, the content categorizer generates the digital signature after combining the content and the content category according to a combination rule; the combination rule may include two parts: the content for generating the digital signature and position relation between the content and the content category.

In the above combination rule, the content for generating the digital signature includes one of the following items:
all information of the content itself corresponding to the determined content category, where, for example, the content is A and A is used as the content for generating the digital signature;
partial information of the content itself corresponding to the determined content category, where, for example, the content is A and A1 is a part of A and A1 is used as the content for generating the digital signature;
content digest of the content itself corresponding to the determined content category, where, for example, the content is A, and A2 is the content digest of A and is used as the content for generating the digital signature; the digest includes but is not limited to: a digest generated by a digital digest technique (such as Message Digest Algorithm 5 (MD5)), partial content extracted from the content, and the thumbnail of an image;
content metadata mapped to the content itself corresponding to the determined content category, where, for example, the content is A ,and A3 is content metadata mapped to A, and A3 is used as the content for generating the digital signature;
all information and content metadata of the content itself corresponding to the determined content category;
partial information and content metadata of the content itself corresponding to the determined content category; and
content digest and content metadata corresponding to the determined content category.

According to how the content categorization requestor requests a category, the content categorizer determines the content for generating the digital signature in one of the following modes:

The content categorization requester requests a category according to at least one of the content itself, content metadata and content digest ,and the content categorizer uses at least one of the content itself, content metadata and content digest as the content for generating the digital signature;

The content categorization requester requests a category according to the content itself, and the content categorizer generates a digest of the content and uses the content digest as the content for generating the digital signature;

The content categorization requester requests a category according to the content itself and the content metadata ,and the content categorizer generates a digest of the content and uses the content digest as the content for generating the digital signature or uses the content digest and the content metadata as the content for generating the digital signature;

The content categorization requester requests a category according to a content reference, and the content categorizer obtains at least one of the content itself, content digest, and content metadata according to the content reference, and uses at least one of the obtained content itself, content digest, and content metadata as the content for generating the digital signature;

The content categorization requestor requests a category according to a content reference and the content categorizer obtains the content according to the content reference, generates a digest of the content, and uses the content digest as the content for generating the digital signature;

The content categorization requestor requests a category according to a content reference, and the content categorizer obtains the content and the content metadata according to the content reference, generates a digest of the content, and uses the content digest and the content metadata as the content for generating the digital signature.

The position relation between the content and the content category in the above combination rule is one of the following:
the content coming ahead of the content category;
the content category coming ahead of the content;
the content category being inserted to a specific position of the content; and
the content being inserted to a specific position of the content category.

S13. The content categorizer returns the content category and the digital signature.

Further, in addition to the content category and the digital signature, one or a combination of the following items may be returned:
combination rule information, adapted to inform of the combination rule for generating the digital signature at the time of trust verification before content screening, where the combination rule information may be specifically a combination rule identifier or a combination rule content;
identifier of the content categorizer, adapted to inform of information of the content categorizing apparatus that categorizes the content at the time of trust verification before content screening;
public key information, mapped to a private key for generating the digital signature, and adapted to provide a public key at the time of trust verification before content screening; and
certificate issued by a third party for the content categorizer, adapted to inform of the identity of the content categorizer and the public key for generating the digital signature at the time of trust verification before content screening.

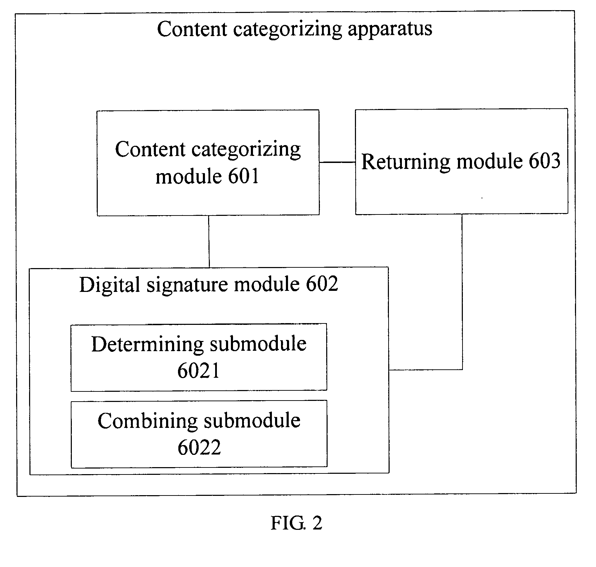

One embodiment of the invention provides a content categorization apparatus. As shown in FIG. 2, the apparatus includes a content categorizing module 601, a digital signature module 602 and a returning module 603, where the digital signature module 602 includes at least one of a determining submodule 6021 and a combining submodule 6022.

The content categorizing module 601 is adapted to categorize a content for which a requester requests a category and determine the content category.

The digital signature module 602 is adapted to generate a digital signature according to the content and the content category determined by the content categorizing module 601, where the digital signature is for trust verification before the content is screened, where, in the digital signature module 602:

The determining submodule 6021 is adapted to determine the content for generating the digital signature according to a combination rule;

The combining submodule 6022 is adapted to combine the content and the content category according to the combination rule;

Accordingly, the digital signature module 602 generates the digital signature according to the combination result. The combination rule includes two parts: the content for generating the digital signature and the position relation between the content and the content category for generating the digital signature.

Specifically, in the combination rule, the content for generating the digital signature includes one of the following items: all information of the content itself corresponding to the determined content category; partial information of the content itself corresponding to the determined content category; content digest of the content itself corresponding to the determined content category; content metadata mapped to the content itself corresponding to the determined content category; all information and content metadata of the content itself corresponding to the determined content category; partial information and content metadata of the content itself corresponding to the determined content category; content digest and content metadata corresponding to the determined content category.

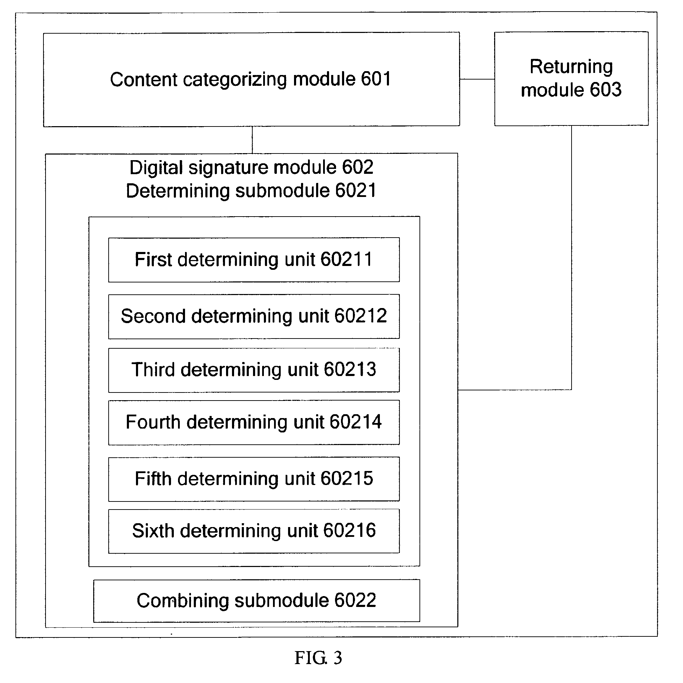

As shown in FIG. 3, according to the mode of requesting a category, the determining submodule 6021 of the digital signature module 602 includes one of the following units to determine the content for generating the digital signature:

1. a first determining unit 60211, via which the digital signature module 602 uses at least one of the content itself, content metadata, and content digest as the content for generating the digital signature when the categorization requestor requests a category according to at least one of the content, content metadata, and content digest;

2. a second determining unit 60212, via which the digital signature module 602 generates a digest of the content and uses the content digest as the content for generating the digital signature when the categorization requester requests a category according to the content itself;

3. a third determining unit 60213, via which the digital signature module 602 generates a digest of the content ,and uses the content digest as the content for generating the digital signature or uses the content digest and the content metadata as the content for generating the digital signature when the categorization requester requests a category according to the content itself and the content metadata;

4. a fourth determining unit 60214, via which the digital signature module 602 obtains at least one of the content itself, content digest, and content metadata according to a content reference ,and uses at least one of the obtained content itself, content digest, and content metadata as the content for generating the digital signature when the content categorization requester requests a category according to the content reference;

5. a fifth determining unit 60215, via which the digital signature 602 obtains the content according to a content reference, generates a digest of the content, and uses the content digest as the content for generating the digital signature when the content categorization requester requests a category according to the content reference;

6. a sixth determining unit 60216, via which the digital signature 602 obtains the content and content metadata according to a content reference, generates a digest of the content, and uses the content digest and the content metadata as the content for generating the digital signature when the content categorization requester requests a category according to the content reference.

In the combination rule, the position relation between the content and the content category includes one of the following: the content coming ahead of the content category; the content category coming ahead of the content; the content category being inserted to a specific position of the content; the content being inserted to a specific position of the content category.

The returning module 603 is adapted to return the content category determined by the content categorizing module 601 and the digital signature generated by the digital signature module 602. The information returned includes one or a combination of the following items:

a. combination rule information, adapted to inform of the combination rule for generating the digital signature at the time of trust verification before content screening, where the combination rule information may be specifically a combination rule identifier or a combination rule content;

b. identifier of the content categorizing apparatus, adapted to inform of information of the content categorizing apparatus that categorizes the content at the time of trust verification before content screening;

c. public key information, mapped to a private key for generating the digital signature, and adapted to provide a public key at the time of trust verification before content screening;

d. certificate issued by a third party for the content categorizing apparatus, adapted to inform of the identity of the content categorizing apparatus and the public key for signing at the time of trust verification before content screening. The information may be returned to the categorization requester or to a third party as requested.

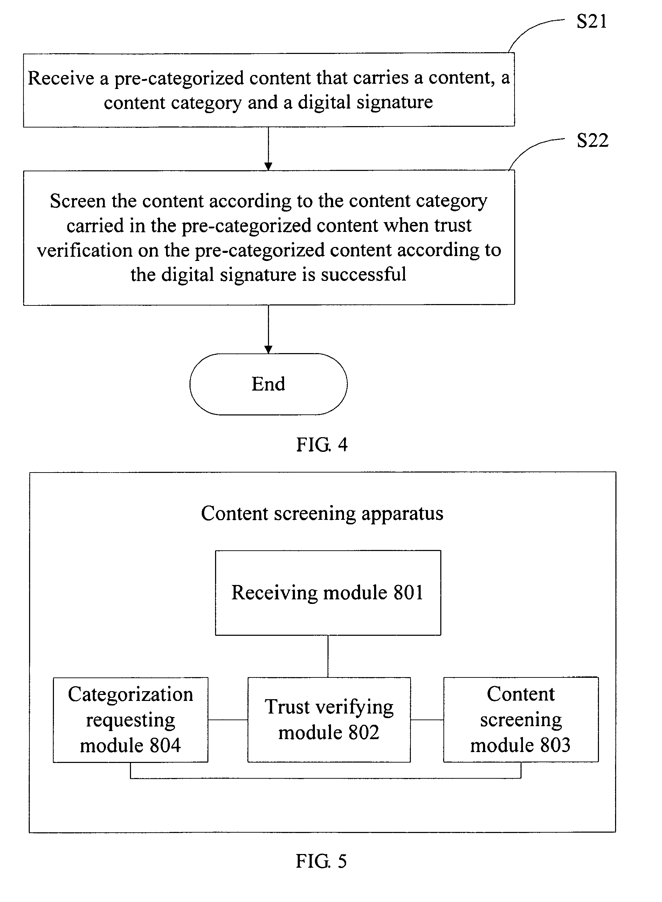

One embodiment of the invention provides a content screening method. As shown in FIG. 4, the method includes the following steps:

S21. A content screener receives a pre-categorized content that carries a content, a content category and a digital signature.

S22. The content screener performs trust verification on the pre-categorized content according to the digital signature and when the trust verification is successful, screens the content according to the content category carried in the pre-categorized content.

To further guarantee that the content categorizer that categorizes the content carried in the pre-categorized content is trustable, the content screener may judge whether the content categorizer that categorizes the content carried in the pre-categorized content is trustable before performing trust verification on the pre-categorized content according to the digital signature. Specifically, the content screener may judge whether the content categorizer is trustable according to at least one of whether the identifier of the content categorizer is in the trusted list of the content screener, and the certificate issued by a third party for the content categorizer. At least one of the content categorizer identifier and the certificate issued by a third party for the content categorizer required for the trust judgment may be obtained from the received pre-categorized content, or obtained from a network element that stores at least one of the content categorizer identifier and/ the certificate issued by a third party for the content categorizer.

When the content screener performs the trust verification on the pre-categorized content according to the digital signature, if a public key corresponding to the private key used for generating the digital signature is required, the content screener obtains the identifier of the content categorizer that categorizes the content carried in the pre-categorized content, the public key information corresponding to the private key used for generating the digital signature, or the certificate issued by a third party for the content categorizer from the received pre-categorized content, and obtains the public key according to the information (the identifier of the content categorizer that categorizes the content carried in the pre-categorized content, the public key information corresponding to the private key used for generating the digital signature, or the certificate issued by a third party for the content categorizer); or the content screener obtains the information (the identifier of the content categorizer that categorizes the content carried in the pre-categorized content, the public key information corresponding to the private key used for generating the digital signature, or the certificate issued by a third party for the content categorizer) from the network element that stores the identifier of the content categorizer that categorizes the content carried in the pre-categorized content, the public key information corresponding to the private key used for generating the digital signature, or the certificate issued by a third party for the content categorizer and obtains the required public key according to the information.

If no default combination rule is available between the content screener and the content categorizer that categorizes the content carried in the pre-categorized content, the content screener obtains combination rule information from the received pre-categorized content; or obtains combination rule information from the content categorizer or a network element that stores the combination rule for the content categorizer, and verifies the digital signature according to the combination rule corresponding to the combination rule information. Specifically, the combination rule information may be a combination rule identifier or a combination rule content.

If the trust verification on the pre-categorized content according to the digital signature is unsuccessful, or before the trust verification on the pre-categorized content according to the digital signature, the content screener judges that the content categorizer that categorizes the content carried in the pre-categorized content is not trustable, the content screener requests a category from a trusted content categorizer and screens the content according to the returned content category.

An embodiment of the invention provides a content screening apparatus. As shown in FIG. 5, the apparatus includes a receiving module 801, a trust verifying module 802 and a content screening module 803, and may further include a categorization requesting module 804.

The receiving module 801 is adapted to receive a pre-categorized content that carries a content, a content category and a digital signature.

The trust verifying module 802 is adapted to verify whether the pre-categorized content is trustable according to the digital signature carried in the pre-categorized content received by the receiving module 801 and send a first trigger signal when the trust verification is successful; and further adapted to send a second trigger signal when the trust verification is unsuccessful.

The content screening module 803 is adapted to screen the content according to the content category carried in the pre-categorized content received by the receiving module 801 with a trigger condition that the first trigger signal is received; and further adapted to screen the content according to a content category received from the categorization requesting module 804.

The categorization requesting module 804 is adapted to request a category from a trusted content categorizing apparatus with a trigger condition that the second trigger signal is received and forward the returned content category to the content screening module 803.

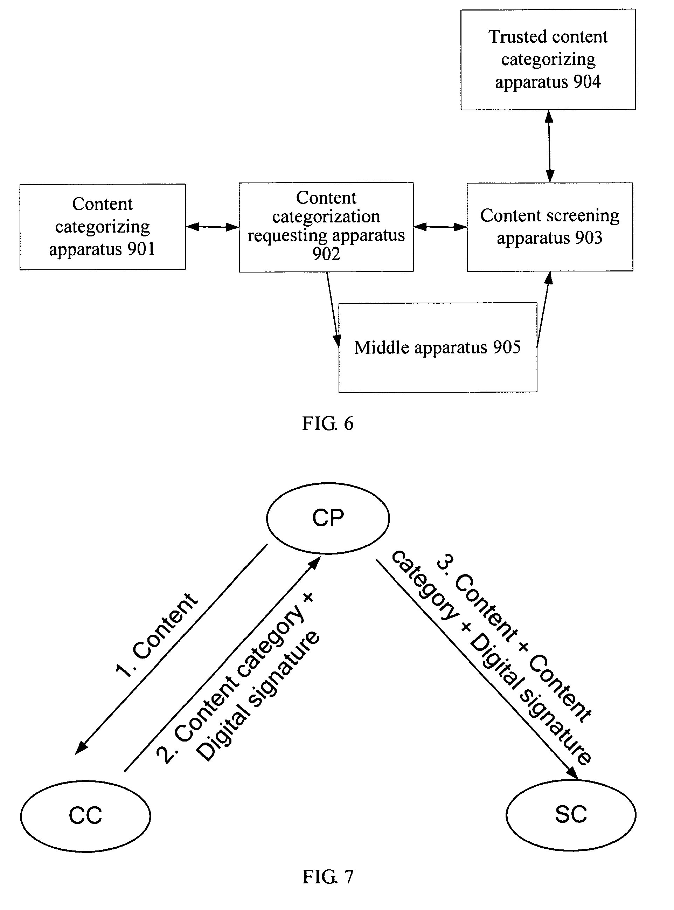

As shown in FIG. 6, a system for implementing a trust model in an embodiment of the invention includes a content categorizing apparatus 901, a content categorization requesting apparatus (content categorization requester) 902 and a content screening apparatus 903.

The content categorizing apparatus 901 is adapted to categorize a content of a category which is requested and determine the content category; generate a digital signature according to the content and the content category; and return the content category and the digital signature. Specifically, the content categorizing apparatus 901 generates the digital signature after combining the content and the content category following a combination rule; the combination rule may include two parts: the content for generating the digital signature and position relation between the content and the content category.

In the combination rule, the content for generating the digital signature includes one of the following items: all information of the content itself corresponding to the determined content category; partial information of the content itself corresponding to the determined content category; content digest of the content itself corresponding to the determined content category; content metadata mapped to the content itself corresponding to the determined content category; all information and content metadata of the content itself corresponding to the determined content category; partial information and content metadata of the content itself corresponding to the determined content category; content digest and content metadata corresponding to the determined content category.

In the combination rule, the position relation between the content and the content category includes one of the following: the content coming ahead of the content category; the content category coming ahead of the content; the content category being inserted to a specific position of the content; the content being inserted to a specific position of the content category.

The content categorization requesting apparatus (content categorization requester) 902 is adapted to request a category from the content categorizing apparatus 901, receive the content category and digital signature returned by the content categorizing apparatus 901, and generate and send a pre-categorized content that carries the content, content category and digital signature. If the content categorizing apparatus 901 also returns at least one of the combination rule information, identifier of the content categorizing apparatus 901, public key information and a certificate issued by a third party for the content categorizing apparatus 901, the generated pre-categorized content also carries at least one of the combination rule information, the identifier of the content categorizing apparatus 901, public key information and the certificate issued by a third party for the content categorizing apparatus 901. Specifically, the combination rule information may be a combination rule identifier or a combination rule content.

The content screening apparatus 903 is adapted to receive the pre-categorized content that carries the content, content category and digital signature, perform trust verification on the pre-categorized content according to the digital signature and when the trust verification is successful, screen the content according to the content category carried in the pre-categorized content.

Further, when the trust verification on the pre-categorized content by the content screening apparatus 903 according to the digital signature fails, the system further includes a trusted content categorizing apparatus 904. The content screening apparatus 903 requests a category from the trusted content categorizing apparatus 904 and screens the content according to the returned content category.

Further, the system for implementing the trust model may include a middle apparatus 905, adapted to forward the pre-categorized content generated and sent by the content categorization requesting apparatus 902 and accordingly, the content screening apparatus 903 receives the pre-categorized content forwarded by the middle apparatus 905.

FIG. 7 shows a procedure for implementing a trust model according to an embodiment of the invention, where the content categorization requesting apparatus (content categorization requester) is a CP and the content categorizing apparatus is a CC, and the content screening apparatus is an SC. The procedure includes the following steps:

1. The CP sends a content to be categorized to the CC.

2. The CC categorizes the content and if the categorization is successful, the CP generates a digital signature according to the content and the content category. and returns the content category and the digital signature to the CP.

3. The content, content category and digital signature from the CP passes through the SC and the SC verifies the digital signature. If the verification is successful, it is determined that the digital signature is added by the CC to the content and the content category, and the content and the content category are not altered.

Note:

1. If there is no fixed default rule about how to combine the content and the content category (for example, the content coming ahead of the content category; the content category coming ahead of the content; the content category being inserted to a specific position of the content; all information of the content is combined with the category; partial information of the content is combined with the category; only content metadata is combined with the category; or the content and content metadata are combined with the category) for the digital signature, a combination rule delivery mechanism is required between the CC that generates the digital signature and the SC that verifies the digital signature. The mechanism may be one of the following:

(1) The CC adds a combination rule identifier in the message returned to the CP and the CP sends the combination rule identifier received from the CC when sending the content, content category and digital signature; if the SC does not understand the combination rule identifier, the SC may obtain the rule content from the CC or obtain the rule content from a third party that understands the combination rule identifier.

(2) The SC obtains the combination rule when necessary: the SC may obtain the combination rule identifier or rule content directly from the CC, or obtain the combination rule identifier or rule content from a third party that stores the combination rule of the CC. The combination rule identifier and combination rule content are both rule information indicating how to combine.

To prevent the CP from providing fraudulent contents on the basis of understanding the rule, the latter mechanism may be adopted in preference.

2. The content for digital signature is the content to deliver and consume during a real interaction. If the CP obtains the content category according to a content reference, such as a Uniform Resource Identifier (URI) or a content identifier while a one-to-one mapping between the content reference and the content carried in the content for screening delivered by the CP cannot be assured, alteration is possible. In this case, the CC obtains at least one of the content itself, content digest and content metadata according to the content reference and generates the digital signature according to at least one of the content itself, content digest and content metadata as well as the content category, instead of generating the digital signature according to the content reference that may not correspond to the content as well as the content category. For example, if the categorization request from the CP carries a URI, the CC may match a stored mapping between URIs and categories by using the URI to obtain a category, or the CC may obtain the corresponding content according to the URI and categorize the content by using a categorization rule like mode recognition and content analysis. The URI is not a content for consumption. A signature for the URI and the category cannot guarantee that the content itself corresponding to the URI is not altered and cannot guarantee a correct mapping between the content and the category. Therefore, it is necessary to obtain the content according to the URI and generate a digital signature for the content and the category.

Two embodiments are described in detail to explain the present invention.

Embodiment 1

A pre-categorized content generation procedure and a pre-categorized content screening procedure in the call mode are described respectively.

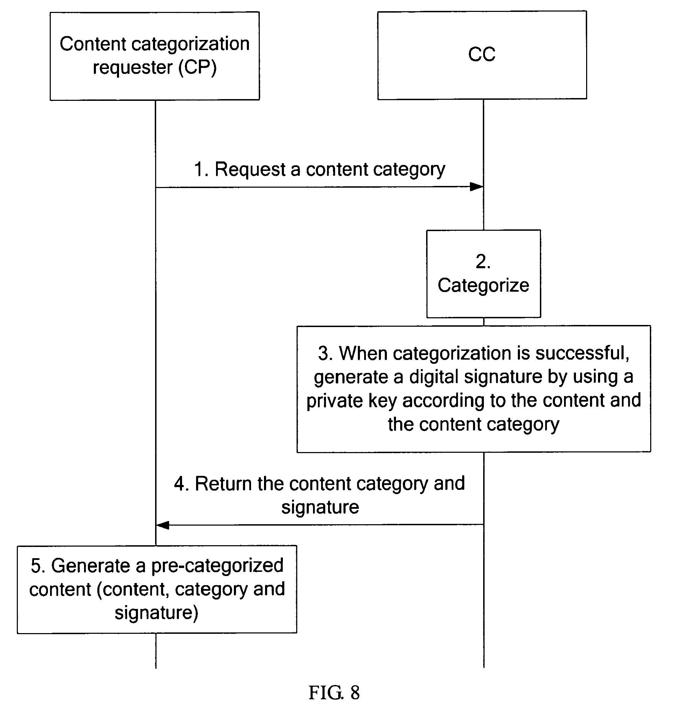

As shown in FIG. 8, the pre-categorized content generation procedure includes the following steps:

1. The CP sends a content to be categorized to the CC as a content categorization requester, requesting a content category.

2. The CC categorizes the content and determines the content category.

3. If the categorization is successful, the CC generates a digital signature by using a private key. The digital signature may be generated based on one of (but not limited to) the following items: all information of the content plus the content category; partial information of the content plus the content category; content metadata plus the content category; all information of the content and content metadata plus the content category; partial information of the content and content metadata plus the content category.

4. The CC returns the content category and the digital signature.

5. The CP generates the pre-categorized content, which includes at least the content, content category and digital signature.

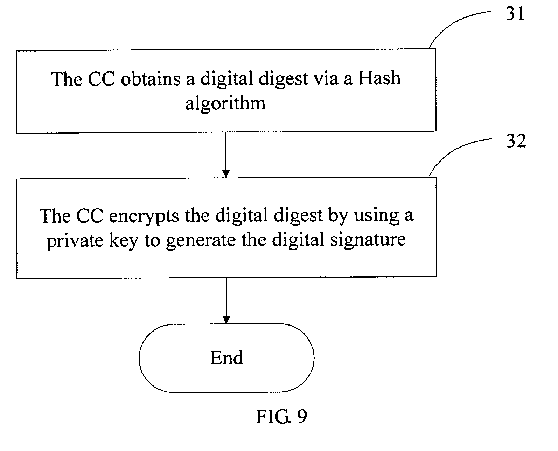

Specifically, as shown in FIG. 9, the digital signature generation process in the step 3 includes the following substeps:

31. Supposing the digital signature generation process is based on the Rivest Shamir Adlemen (RSA) algorithm, the CC obtains a digital digest by applying a Hash algorithm to at least one of the content itself and content metadata plus the content category; and

32. The CC encrypts the digital digest by using the private key to generate the digital signature.

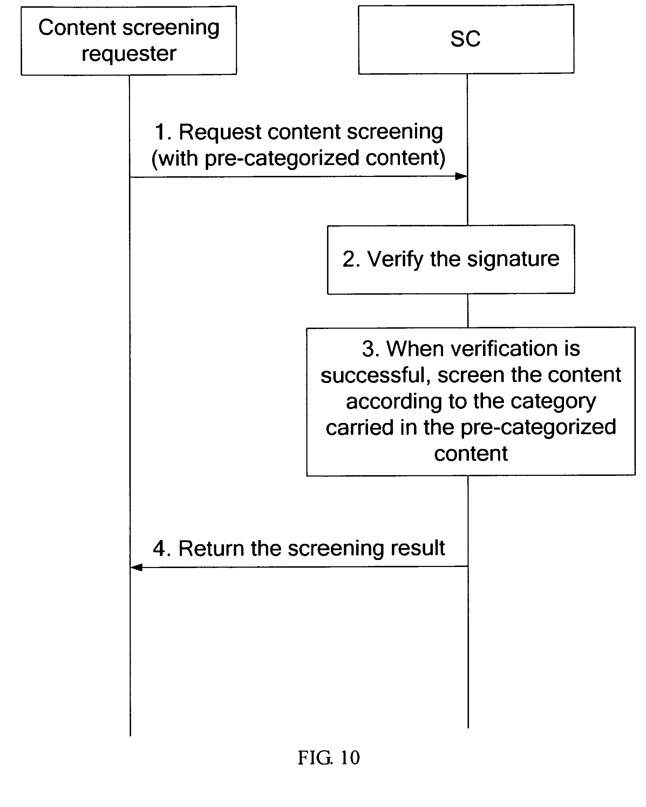

As shown in FIG. 10, the pre-categorized content screening procedure in the call mode includes the following steps:

1. The content screening requester requests content screening, carrying the pre-categorized content from the CP.

2. The SC verifies the digital signature carried in the pre-categorized content. If the verification is successful, it is determined that the signature is generated by the CC and the electronic source for which the signature is intended is the content and content category received by the SC.

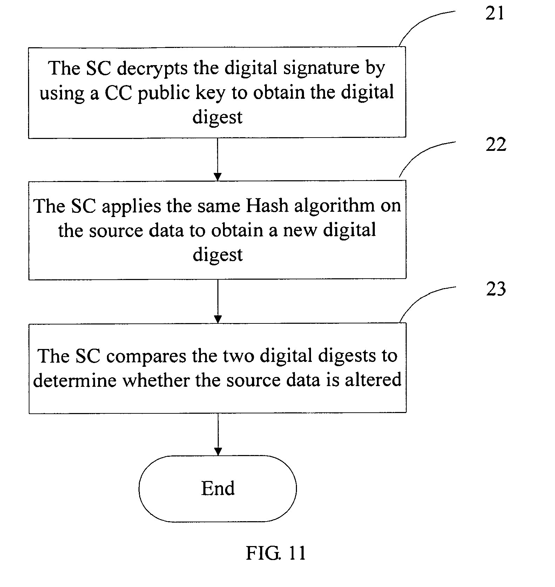

Specifically, as shown in FIG. 11, the digital signature verification process in this step includes the following substeps:

21. The SC decrypts the digital signature by using the CC public key to obtain the digital digest;

22. The SC applies the Hash algorithm to the electronic source (content and content category) to obtain a new digital digest, and the Hash algorithm is the same as that the CC uses to generate the digital signature; and

23. The SC compares the two digital digests obtained in substeps 21 and 22 and if the two signatures are consistent, determines that the electronic source (content and content category) is not altered.

3. When the verification is successful, the SC screens the content according to the content category carried in the pre-categorized content.

4. The SC returns the screening result.

Embodiment 2

In this embodiment, the Public Key Infrastructure (PKI) based digital signature technique is adopted (but not limited to the PKI based digital signature technique). A pre-categorized content generation procedure and a pre-categorized content screening procedure in the call mode are described respectively.

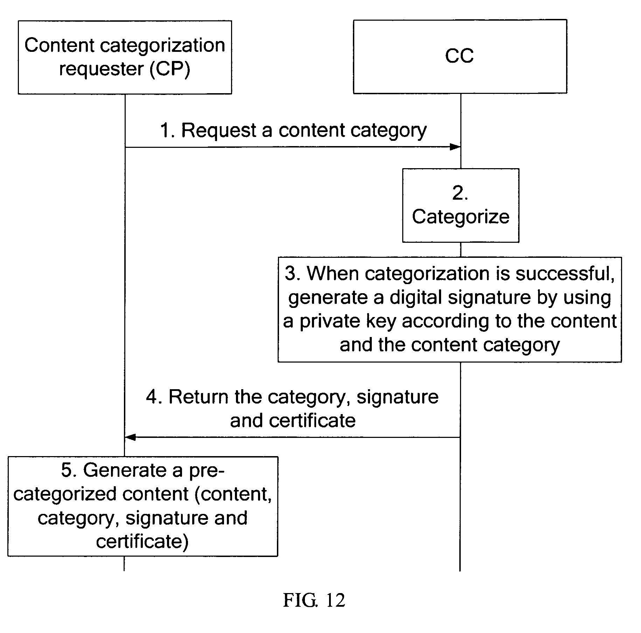

As shown in FIG. 12, the pre-categorized content generation procedure includes the following steps:

1. The CP sends a content to be categorized to the CC as a content categorization requester, requesting a content category.

2. The CC categorizes the content and determines the content category.

3. If the categorization is successful, the CC generates a digital signature by using a private key. The digital signature may be generated based on one of (but not limited to) the following items: all information of the content plus the content category; partial information of the content plus the content category; content metadata plus the content category; all information of the content and content metadata plus the content category; partial information of the content and content metadata plus the content category.

4. The CC returns the content category and the digital signature ,and may also return a certificate issued by a Certificate Authority (CA) for the CC, a public key, a combination rule identifier and a CC identifier.

5. The CP generates the pre-categorized content, which includes at least the content, content category and digital signature. The pre-categorized content may also carry the certificate, the combination rule identifier, the public key and the CC identifier.

Specifically, the digital signature generation process in step 3 includes the following substeps:

31. Supposing the digital signature generation process is based on the RSA algorithm, the CC obtains a digital digest by applying a Hash algorithm to at least one of the content itself and content metadata plus the content category;

32. The CC encrypts the digital digest by using the private key to generate the digital signature.

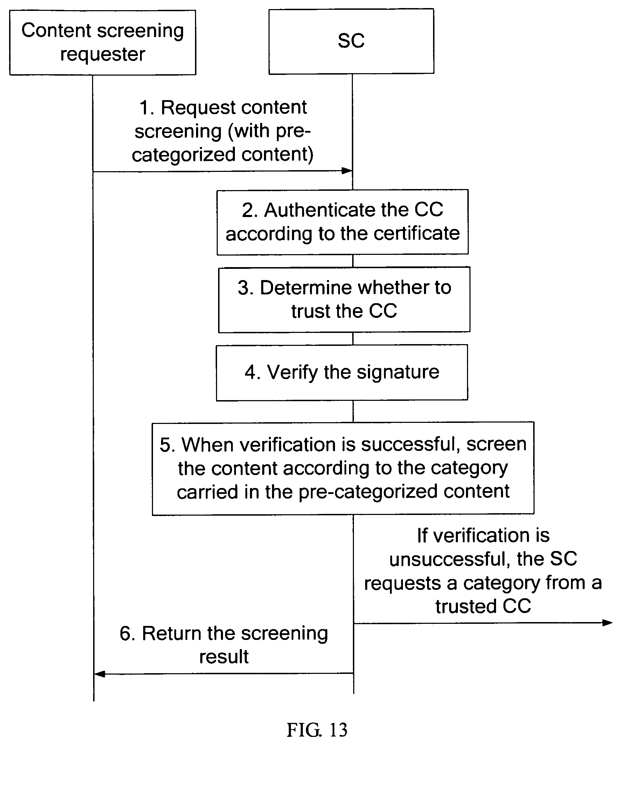

To further identify the identity and trustability of the CC, a pre-categorized content screening procedure in the call mode shown in FIG. 13 includes the following steps:

1. The content screening requester requests content screening, carrying the pre-categorized content from the CP.

2. The SC authenticates the identity of the CC according to the certificate carried in the received pre-categorized content, and if the authentication is successful, the SC obtains the name, unique identifier, public key, and certificate validity period of the CC. Specifically, the authentication process includes: the SC uses the root certificate public key of the CA (the root certificate public key may be obtained from the CA center in advance and the embodiments of the invention do not limit the method for obtaining the root certificate public key) to verify the signature of the certificate and if the verification is successful, the SC determines that the certificate is a valid certificate issued by the third-party CA. Then the SC checks the validity period of the certificate and whether the certificate is void and blacklisted to determine the valid identity of the CC.

3. If the authentication is successful, the SC determines whether to trust the content category information provided by the CC according to the name and unique identifier of the CC. For example, the SC judges whether the CC is in a trusted list of the SC.

The foregoing step 2 and step 3 may have flexible substitute solutions:

(1) The SC directly decides whether to trust the category information provided by the CC according to the certificate.

(2) If the pre-categorized content carries no certificate but carries a CC identifier, the SC obtains a certificate issued by a third-party CA for the CC from the third-party CA or directly from the CC.

(3) If the pre-categorized content carries no certificate but carries a CC identifier, the SC decides whether to trust the category information provided by the CC directly according to the CC identifier. If a CC public key is required, the SC obtains the CC public key according to the CC identifier from a third party that can provide the CC public key or directly from the CC.

4. If the SC decides to trust the CC, the SC verifies the digital signature and if the verification is successful, the SC determines that the signature is generated by the CC and the electronic source for which the signature is intended is the content and the content category received by the SC.

5. If the verification is successful, the SC screens the content according to the content category carried in the pre-categorized content. Otherwise, the SC requests a category from a trusted CC.

6. The SC returns the screening result.

Specifically, the digital signature verification process in step 4 includes the following substeps:

41. The SC decrypts the digital signature by using the CC public key to obtain the digital digest;

42. The SC applies the Hash algorithm to the electronic source (content and content category) to obtain a new digital digest, and the Hash algorithm is the same as that the CC uses to generate the digital signature; and

43. The SC compares the two digital digests obtained in substeps 41 and 42 and if the two signatures are consistent, it is determined that the electronic source (content and content category) is not altered.

To sum up, in the embodiments of the invention, the content categorizing apparatus categorizes the content for which the categorization requester requests a category and determines the content category (including but not limited to: matching the content for which a category is requested with a database of the CC directly to obtain the content category, or obtaining the category by analyzing the content through a specific algorithm), generates a digital signature according to the content and the content category, and returns the content category and the digital signature. Later when the content screening is performed, the SC verifies whether the pre-categorized content is trustable according to the digital signature carried in the received pre-categorized content and when the verification is successful, the SC screens the content according to the content category carried in the pre-categorized content.

Because of the digital signature generation process and the digital signature verification process, when the pre-categorized content is consumed, the SC is able to verify that the content and the content category combined according to the combination rule in the electronic source for which the digital signature is intended are consistent with the received content and the content category respectively. Thereby, a correct mapping between the content and the content category carried in the pre-categorized content is guaranteed. This effectively prevents alteration or replacement of at least one of the content itself and category. Meanwhile, because private key encrypted data is verified with a public key, and a one-to-one mapping exists between public keys and private keys, the content categorizing apparatus can be authenticated to ensure the legal source of category data.

Further, if the content screening apparatus judges whether the content categorizing apparatus that categorizes the content carried in the pre-categorized content is trustable before the trust verification on the pre-categorized content according to the digital signature, the trustability of the content categorizing apparatus can be further determined.

It is understandable to those skilled in the art that all or part of the steps of the foregoing embodiments can be implemented by hardware following instructions of programs. The programs may be stored in a computer readable storage medium, such as a Read-Only Memory (ROM), a Random Access Memory (RAM), a magnetic disk and a compact disk.

Although the invention has been described through some exemplary embodiments, the invention is not limited to such embodiments. It is apparent that those skilled in the art can make various modifications and variations to the invention without departing from the scope of the invention. The invention is intended to cover these modifications and variations provided that they fall in the scope of protection defined by the following claims or their equivalents.

## Claims

**1.** A content categorization method, comprising:
categorizing a content for which a category is requested and determining the content category;
generating a digital signature according to the content and the content category, wherein the digital signature is for trust verification before content screening; and
returning the content category and the digital signature.

**2.** The method of claim 1, wherein the step of generating the digital signature according to the content and the content category comprises:
generating the digital signature after combining the content and the content category according to a combination rule, which comprises two parts: content for generating the digital signature and position relation between the content for generating the digital signature and the content category.

**3.** The method of claim 2, wherein the content for generating the digital signature comprises one of the following:
all information of the content itself corresponding to the determined content category;
partial information of the content itself corresponding to the determined content category;
content digest of the content itself corresponding to the determined content category;
content metadata mapped to the content itself corresponding to the determined content category;
all information of the content itself corresponding to the determined content category and the content metadata;
partial information of the content itself corresponding to the determined content category and the content metadata; and
content digest corresponding to the determined content category and the content metadata.

**4.** The method of claim 2, wherein the content for generating the digital signature is determined in one of the following modes:
when the category is requested according to at least one of the content itself, content metadata and content digest, using at least one of the content itself, content metadata and content digest as the content for generating the digital signature;
when the category is requested according to the content itself, generating a digest of the content itself and using the content digest as the content for generating the digital signature;
when the category is requested according to the content itself and content metadata, generating a digest of the content itself and using the content digest as the content for generating the digital signature or using the content digest and the content metadata as the content for generating the digital signature;
when the category is requested according to a content reference, obtaining at least one of the content itself, content digest, and content metadata according to the content itself reference and using at least one of the obtained content itself, content digest, and content metadata as the content for generating the digital signature;
when the category is requested according to a content reference, obtaining the content itself according to the content reference, generating a digest of the content itself, and using the content digest as the content for generating the digital signature; and
when the category is requested according to a content reference, obtaining the content itself and content metadata according to the content reference, generating a digest of the content itself, and using the content digest and the content metadata as the content for generating the digital signature.

**5.** The method of claim 2, wherein the position relation between the content for generating the digital signature and the content category for generating the digital signature comprises one of the following:
the content coming ahead of the content category;
the content category coming ahead of the content;
the content category being inserted to a specific position of the content; and
the content being inserted to a specific position of the content category.

**6.** The method of any of claims 1-5, wherein the step of returning the content category and the digital signature further comprises returning any of the following items:
combination rule information, adapted to inform of the combination rule for generating the digital signature at trust verification before content screening, and specifically a combination rule identifier or a combination rule content;
identifier of a content categorizer, adapted to inform of information of the content categorizer that categorizes the content at trust verification before content screening;
public key information, mapped to a private key for generating the digital signature, and adapted to provide a public key at trust verification before content screening; and
certificate issued by a third party for the content categorizer, adapted to inform of the identity of the content categorizer and a public key mapped to a private key for generating the digital signature at trust verification before content screening.

**7.** A content screening method, comprising:
receiving a pre-categorized content that carries a content, a content category and a digital signature; and
screening the content according to the content category carried in the pre-categorized content when trust verification on the pre-categorized content according to the digital signature is successful.

**8.** The method of claim 7, further comprising:
requesting a category from a trusted content categorizer when trust verification on the pre-categorized content according to the digital signature is unsuccessful and screening the content according to the returned content category.

**9.** The method of claim 7 or 8, before performing trust verification on the pre-categorized content according to the digital signature, further comprising: determining whether the content categorizer that categorizes the content carried by the pre-categorized content is trustable and performing trust verification on the pre-categorized content when determining the content categorizer is trustable.

**10.** The method of claim 9, wherein the step of determining whether the content categorizer that categorizes the content carried by the pre-categorized content is trustable comprises:
determining whether the content categorizer is trustable according to at least one of whether an identifier of the content categorizer is in a trusted list of a content screener, and a certificate issued by a third party certificate authority for the content categorizer.

**11.** The method of claim 10, wherein the identifier of the content categorizer and/or the certificate issued by a third party certificate authority for the content categorizer are obtained via one of the following approaches:
obtaining the identifier of the content categorizer and/or the certificate issued by a third party certificate authority for the content categorizer from the received pre-categorized content; or
obtaining the identifier of the content categorizer and/or the certificate issued by a third party certificate authority for the content categorizer from a network element that stores the identifier of the content categorizer and/or the certificate issued by a third party certificate authority for the content categorizer.

**12.** The method of claim 7 or 8, wherein, if a public key mapped to a private key for generating the digital signature is required at trust verification on the pre-categorized content according to the digital signature, the public key is obtained via one of the following approaches:
obtaining the required public key according to the identifier of the content categorizer that categorizes the content carried in the pre-categorized content, the public key information mapped to the private key for generating the digital signature, or the certificate issued by a third party certificate authority obtained from received pre-categorized content; or
obtaining the required public key according to the identifier of the content categorizer, the public key information mapped to the private key for generating the digital signature, or the certificate issued by a third party certificate authority obtained from a network element.

**13.** The method of claim 7 or 8, wherein, when no default combination rule is available between the content screener and the content categorizer that categorizes the content carried in the pre-categorized content, the method comprises:
obtaining combination rule information from the received pre-categorized content or from the content categorizer or a network element that stores a combination rule used by the content categorizer; and
verifying the digital signature according to a combination rule corresponding to the combination rule information.

**14.** The method of claim 13, wherein the combination rule information is a combination rule identifier or a combination rule content.

**15.** A content categorization apparatus, comprising:
a content categorizing module (601), adapted to categorize a content for which a category is requested and determine the content category;
a digital signature module (602), adapted to generate a digital signature according to the content and the content category determined by the content categorizing module (601), wherein the digital signature is for trust verification before content screening; and
a returning module (603), adapted to return the content category determined by the content categorizing module (601) and the digital signature generated by the digital signature module (602).

**16.** The apparatus of claim 15, wherein the digital signature module (602) comprises at least one of the following submodules:
a determining submodule (6021), adapted to determine a content for generating the digital signature according to a combination rule; and
a combining submodule (6022), adapted to combine the content and the content category according to the combination rule, which comprises: content for generating the digital signature and position relation between the content for generating the digital signature and the content category.

**17.** The apparatus of claim 16, wherein the determining submodule (6021) comprises one of the following units:
a first determining unit (60211), when a category is requested according to a content, content metadata and/or a content digest, adapted to use the content, content metadata and/or content digest as the content for generating the digital signature;
a second determining unit (60212), when a category is requested according to a content, adapted to generate a digest of the content and use the content digest as the content for generating the digital signature;
a third determining unit (60213), when a category is requested according to a content and content metadata, adapted to generate a digest of the content and use the content digest as the content for generating the digital signature or use the content digest and the content metadata as the content for generating the digital signature;
a fourth determining unit (60214), when a category is requested according to a content reference, adapted to obtain a content, a content digest, and/or content metadata according to the content reference and use the obtained content, content digest, and/or content metadata as the content for generating the digital signature;
a fifth determining unit (60215), when a category is requested according to a content reference, adapted to obtain a content according to the content reference, generate a digest of the content, and use the content digest as the content for generating the digital signature; and
a sixth determining unit (60216), when a category is requested according to a content reference, adapted to obtain a content and content metadata according to the content reference, generate a digest of the content, and use the content digest and the content metadata as the content for generating the digital signature.

**18.** A content screening apparatus, comprising:
a receiving module (801), adapted to receive a pre-categorized content that carries a content, a content category and a digital signature;
a trust verifying module (802), adapted to perform trust verification on the pre-categorized content according to the digital signature carried in the pre-categorized content received by the receiving module (801) , and when the trust verification on the pre-categorized content is successful, send a first trigger signal; and
a content screening module (803), adapted to receive the first trigger signal sent by the trust verifying module (802), and perform content screening according to the content category carried in the pre-categorized content received by the receiving module (801).

**19.** The apparatus of claim 18, wherein the trust verifying module (802) is further adapted to send a second trigger signal when the trust verification on the pre-categorized content is unsuccessful;
accordingly, the apparatus further comprises: a categorization requesting module (804), adapted to receive the second trigger signal sent by the trust verifying module (802), request a category from a trusted content categorizer, and send the returned content category to the content screening module (803); and
accordingly, the content screening module (803) is adapted to receive the content category sent by the categorization requesting module (804) and perform content screening according to the content category.

**20.** A system for implementing a trust model, comprising a content categorizing apparatus (901), a content categorization requesting apparatus (902) and a content screening apparatus (903), wherein:
the content categorizing apparatus (901) is adapted to categorize a content for which the content categorization requesting apparatus (902) requests a category and determine the content category; generate a digital signature according to the content and the content category; and return the content category and the digital signature to the content categorization requesting apparatus (902);
the content categorization requesting apparatus (902) is adapted to request a category from the content categorizing apparatus (901), receive the content category and the digital signature returned by the content categorizing apparatus (901), and generate and send a pre-categorized content that carries the content, the content category and the digital signature; and
the content screening apparatus (903) is adapted to receive the pre-categorized content that carries the content, the content category and the digital signature, perform trust verification on the pre-categorized content according to the digital signature and when the trust verification is successful, screen the content according to the content category carried in the pre-categorized content.

**21.** The system of claim 20, further comprising: a trusted content categorizing apparatus (904), adapted to receive a categorization request sent by the content screening apparatus (903) when the trust verification by the content screening apparatus (903) on the pre-categorized content is unsuccessful, and return a content category to the content screening apparatus (903) for content screening.

**22.** The system of claim 20 or 21, further comprising:
a middle apparatus (905), adapted to receive the pre-categorized content generated and sent by the content categorization requesting apparatus (902) and forward the pre-categorized content; and
accordingly,
the content screening apparatus (903), further adapted to receive the pre-categorized content forwarded by the middle apparatus (905).

**23.** A computer readable storage medium, storing a computer program that enables one or more processors to execute the following steps:
categorizing a content for which a category is requested and determining the content category;
generating a digital signature according to the content and the content category, wherein the digital signature is for trust verification before content screening; and
returning the content category and the digital signature.

**24.** A computer readable storage medium, storing a computer program that enables one or more processors to execute the following steps:
receiving a pre-categorized content that carries a content, a content category and a digital signature; and
screening the content according to the content category carried in the pre-categorized content when trust verification on the pre-categorized content according to the digital signature is successful.
